# EUROPEAN PATENT APPLICATION

(11) **EP 4 841 231 A1**
(43) Date of publication of application: **18.11.2026**
(21) Application number: 25175772.0
(22) Date of filing: 12.05.2025
(51) Int. Cl.: G01M 3/40

(54) **METHOD OF DETECTING A LEAK IN A MEMBRANE BY HIGH VOLTAGE APPLICATION**

(71) Applicant: Sika Technology AG, 6340 Baar (CH)
(72) Inventor: DOMINGO, Ceasar, Lyndhurst, 07071 (US); SCUDERI, Michael, Lyndhurst, 07071 (US)
(74) Representative: Sika Patent Attorneys

(57) **Abstract**

The application relates to a method of detecting a leak in a water impermeable membrane comprising the following steps:
Adhering a water impermeable membrane **M** onto a support substrate **SuS** by an electrically conductive adhesive **ECA;**
applying electrical voltage higher than 600 V, preferably higher than 2 kV, more preferred between 5 and 10 kV, between a conductive detector **CD** on top of the water impermeable membrane **M** and the electrically conductive adhesive **ECA** such that current will flow between the electrically conductive adhesive **ECA** and the conductive detector **CD** through any leak located within the water impermeable membrane **M;**
sensing the current between the electrically conductive adhesive **ECA** and the conductive detector **CD** so as to detect any leak.

The application provides a method for leak detection for waterproof membranes that does not rely on the application of water for detection purposes.

## Description

### Technical field

This invention relates to a method of detecting a leak in a water impermeable membrane, preferably on a roof, using voltage to generate a current through any defects which can be detected by sensors on top of the membrane.

### Background of the invention

The failure to detect, find and correct membrane defects during and as soon after its installation can cause premature failure. Problems include design deficiencies, faulty application of the membrane system and damage by subsequent tradesmen. Roof designs incorporating a waterproofing membrane under a green roof, insulation layer, wear-course, or topping slab greatly exacerbate the problem of leak locating. The early detection of leaks in waterproof membranes is crucial during construction and for effective roof maintenance. Leaks in conventional roof assemblies allow moisture to accumulate under the membrane in the underlying components such as protection boards and insulation. Accumulated water in insulation compromises its thermal properties. Accumulated water in construction materials can cause rotting and other damage which is very costly to repair.

Low voltage electrical conductance testing is often used to detect and locate leaks in waterproof membranes. The principal technique of the conductance leak location method is to establish an electrical potential between the electrically insulating membrane and the underlying roof substrate. A controlled surface covering of water forms the conductive path horizontally across the membrane to any membrane breach. At a breach location, the test instrument detects the electrical path that is formed through the water leaking to the conductive substrate below.

Low voltage electrical methods to detect and locate breaches are effective; however, they require a controlled surface covering of water to form the conductive path horizontally across the membrane. This brings the disadvantage of having access to water, requires a uniform distribution of water, potentially damages the area below in case of leakage and might fail to detect leakage around uneven surfaces.

Further, they require an electrically conductive surface immediately below and in intimate contact with the membrane. Membranes in conventional assemblies are made from thermoplastic materials like PVC and polyolefins. These membranes are adhered with adhesives or mechanically fastened to non-conductive materials such as plywood substrate or protection boards which inhibit electric conductance testing.

Aim to provide a method for leak detection on waterproof membranes that does not rely on the application of water for detection purposes.

### Summary of the invention

According to one aspect of the invention there is provided a method of detecting a leak in a water impermeable membrane comprising the following steps:
a) Adhering a water impermeable membrane **M** onto a support substrate **SuS** by an electrically conductive adhesive **ECA**;
b) applying electrical voltage higher than 600 V, preferably higher than 2 kV, more preferred between 5 and 10 kV, between a conductive detector **CD** on top of the water impermeable membrane **M** and the electrically conductive adhesive **ECA** such that current will flow between the electrically conductive adhesive **ECA** and the conductive detector **CD** through any leak located within the water impermeable membrane **M;**
c) sensing the current between the electrically conductive adhesive **ECA** and the conductive detector **CD** so as to detect any leak.

Preferred embodiments of the composition are reproduced in the dependent claims. The invention is elucidated below comprehensively.

### A way of performing the invention

In step b), electrical voltage higher than 600V, preferably higher than 2 kV, more preferred between 5 and 10 kV, is applied, between a conductive detector **CD** on top of the water impermeable membrane **M** and the electrically conductive adhesive **ECA** such that current will flow between the electrically conductive adhesive **ECA** and the conductive detector **CD** through any leak located within the water impermeable membrane **M.** The high voltage is advantageous in regard to the detection of leaks works without the necessity of covering the water impermeable membrane **M** with water.

Hence it is preferred, if in step b), current will flow between the electrically conductive adhesive **ECA** and the conductive detector **CD** through the air, preferably by an electric arc, of any leak located within the impermeable membrane **M.**

The conductive detector **CD** is preferable a portable device. Preferably, in step c), the conductive detector **CD** detects the current with an electrode brush, preferably an electrode brush with conductive metal bristles. It is further preferred, that in step c), the current is detected on a dry water impermeable membrane **M.** A suitable conductive detector **CD** is PCWI Compact DC30 High Voltage Holiday Detector from PCWI International Pty Ltd.

Preferably the leak detection is carried out by sensing the current between the electrically conductive adhesive **ECA** and the conductive detector **CD** using a conductor applied on top of the water impermeable membrane **M** which is connected to the voltage potential and includes a sensor in the detector device to detect the current that is created through the water impermeable membrane **M** by the leak.

In step a), a water impermeable membrane **M** is adhered onto a support substrate **SuS** by an electrically conductive adhesive **ECA.**

The support substrate **SuS** is preferably part of a waterproofing system.

The support substrate **SuS** is preferably part of a building, such as balcony, a terrace, a roof, particularly a flat or a slightly sloping roof, a roof garden, in the inner parts of a building of a floor, preferably a roof, particularly preferred a flat roof.

The support substrate **SuS** is preferably made of a material selected from the list consisting of:
- metals and alloys, such as aluminium, copper, iron, steel, nonferrous metals, including surface-finished metals and alloys, such as galvanized metals or chrome-plated metals;
- asphalt;
- bitumen;
- concrete, lightweight concrete, mortar, cement, fibre cement, brick, adobe, tile, slate, gypsum, gypsum panels, or natural stone, such as granite or marble;
- repair or levelling compounds based on PCC (polymer modified cement) or ECC (epoxy modified cement);
- timber, plywood, paper, cardboard, wood materials bonded with organic resins, resin-textile composites or so-called polymer composites;
- insulating foams, particularly out of EPS, XPS, PUR, PIR, rock wool, glass wool or foamed glass;

More preferably, the support substrate **SuS** is selected from the list consisting of metals, alloys, asphalt, bitumen, concrete, gypsum, timber and plywood.

Preferably the electrically conductive adhesive **ECA** comprises:
a) at least one contact adhesive **CA** or pressure sensitive adhesive **PSA** or dispersion adhesive **DA,** preferably a contact adhesive **CA;** and
b) at least one electrically conductive filler material **ECFM.**

Preferably, the contact adhesive **CA** comprises:
a) at least one rubber component, wherein the rubber component is selected from the group consisting of chloroprene rubber, butyl rubber, halogenated butyl rubber, nitrile rubber, natural rubber, and mixtures thereof, preferably nitrile rubber; preferably with a weight percent of 5 - 60 wt.-%, more preferably 10 - 50 wt.-%, even more preferably 10 - 30 wt.-%, based on the total weight of the contact adhesive **CA;** and
b) at least one organic solvent preferably with a weight percent of 50 - 90 wt.-%, more preferably 60 - 85 wt.-%, based on the total weight of the contact adhesive **CA.**

Preferably, the dispersion adhesive **DA** comprises:
a) an aqueous dispersion comprising at least one polymer selected from the group consisting of polyvinyl acetate, vinyl acetate-ethylene copolymers (VAE), vinyl laurate-ethylene-vinyl chloride copolymers, acrylic polymer, and a mixture of two or more thereof, preferably vinyl acetate-ethylene copolymers (VAE); preferably with a weight percent of the at least one polymer being 10 - 70 wt.-%, more preferably 30 - 50 wt.-%, even more preferably 35 - 45 wt.-%, based on the total weight of the dispersion adhesive **DA;** and
b) a water content of 5 - 75 wt.-%, preferably 20 - 60 wt.-%, more preferably 30 - 40, based on the total weight of the dispersion adhesive **DA** and including the water content of the aqueous dispersion from a).

Preferably the pressure sensitive adhesive **PSA** compromises at least 85 wt.-%, preferably at least 90 wt.-%, based on the total weight of the pressure sensitive adhesive **PSA,** of at least one acrylic polymer.

Preferably the electrically conductive adhesive **ECA** is a dispersion adhesive **DA** or a contact adhesive **CA,** most preferably a contact adhesive **CA.**

Preferably the electrically conductive filler material **ECFM** is graphite, carbon black or carbon fibres **CF,** preferably carbon fibres **CF.**

Preferably the amount of electrically conductive filler material **ECFM,** preferably carbon fibres **CF,** is 2.5 to 9.0 wt.-%, preferably 3.0 to 7.0 wt.-%, more preferably 4.0 to 6.0 wt.-%, based on the total weight of the electrically conductive adhesive **ECA.** As can be seen in table 1 in the comparison of Ex. 3 and Ex. 4 with Ex. 2, an amount of less than 2.5 wt.-% lead to an insufficient conductivity. The comparison of Ex. 3 and Ex. 4 with Ex. 5 indicates that an amount of more than 8.0 wt.-% leads to a high viscosity that is disadvantageous for applying the electrically conductive adhesive **ECA** by spraying or rolling out.

Preferably the carbon fibres **CF** have a length of 40 - 200 µm, preferably 50 - 150 µm, more preferably 60 - 120 µm. Fibers longer than 200 µm have the disadvantage that they tend to set up and stick out vertically of the electrically conductive adhesive **ECA.** The length of the carbon fibres can for example be determined by microscopy.

Preferably the carbon fibres **CF** have a diameter of 2 - 12 µm, preferably 3 - 10 µm, more preferably 4-7 µm. The diameter of the carbon fibres can for example be determined by microscopy.

Preferably the carbon fibres **CF,** have an electrical resistivity of less than 5 mΩ*cm, preferably less than 3 mΩ*cm, more preferably less than 2 mΩ*cm.

Preferably the electrically conductive adhesive **ECA,** after mixing all the components, has a viscosity of less than 10000 cP, preferably less than 5000 cP, more preferably less than 2000 cP, using a Brookfield DV1 viscometer with a RV #2 spindle at 23 °C. A viscosity of less than 2000 cP is favourable in regard to better application of the electrically conductive adhesive **ECA** by spraying and rolling out.

Preferably the water impermeable membrane **M** comprises a waterproofing layer **WL,** comprising at least one thermoplastic elastomer **P1.**

Preferably the at least one thermoplastic elastomer **P1** is selected from the group consisting of polyvinyl chloride (PVC), thermoplastic polyolefins and ethylene-propylene diene monomer (EPDM).

The thickness of the waterproofing layer **WL** is not particularly restricted. According to one or more embodiments, the waterproofing layer **WL** have a thickness determined by using the measurement method as defined in DIN EN 1849-2 standard of 0.1 - 5.0 mm, preferably 0.4 - 3.0 mm.

All industry standards and norms mentioned in this document refer to the versions valid at the date of first filing, unless stated otherwise.

Preferably the water impermeable membrane **M** further comprises a reinforcement layer, which is preferably fully embedded into the waterproofing layer **WL.** The reinforcement layer may be useful to ensure the mechanical stability of the waterproofing layer when the water impermeable membrane **M** is exposed to varying environmental conditions, in particular to large temperature fluctuations. The type of the reinforcement layer, if used, is not particularly restricted. For example, the reinforcement layers commonly used for improving the dimensional stability of thermoplastic roofing membranes can be used. Preferable reinforcement layers include non-woven fabrics, woven fabrics, and non-woven scrims; preferably containing inorganic and/or synthetic fibres, more preferably synthetic fibres.

Preferably, the reinforcement layer is selected from the group consisting of a layer comprising non-woven fabric comprising inorganic and/or synthetic fibres and a layer comprising non-woven scrim comprising inorganic and/or synthetic fibres.

### Examples

The following examples illustrate the present invention without being limiting.

| | |
|---|---|
| Carbon fibres | MF IM 56R-080, milled carbon fibres, electrical resistivity: 1.5 mΩ*cm, fibre length: 80 +-20µm, fibre diameter: 4-7 µm, Apply Carbon S.A.S. (PROCOTEX) |
| Sarnacol^{®} 2170 VC | Solvent-based (acetone, tert-butyl acetate), one-component adhesive based on nitrile rubber, rubber content: 20 wt.-%, solvent content: 78 wt.-% |
| Sarnacol^{®} 2170 | Solvent-based (butanone, toluene, xylene, ethylbenzene), one-component adhesive based on nitrile rubber, rubber content: 20 wt.-%, solvent content: 78 wt.-% |
| Sarnacol^{®} 2121 VC | Water-based, one-component adhesive based on vinyl acetate-ethylene copolymers (VAE), vinyl acetate-ethylene copolymers (VAE) content: 40 wt.-%, water content: 35 wt.-% |
| Sarnafil^{®} S327-60 Feltback | 1.5 mm PVC thermoplastic membrane with integral polyester reinforcement |
| Sarnafil^{®} S327-80 | 2 mm PVC thermoplastic membrane with an integral polyester reinforcement |

The experiment compositions Ex. 2, Ex. 3, Ex. 4, Ex. 5, Ex. 6 and Ex. 7 were prepared by addition of the electrically conductive material (carbon fibres) to the adhesives (Sarnacol^{®} 2170, Sarnacol^{®} 2170 VC or Sarnacol^{®} 2121 VC), by weight percentage based on the total weight of the obtained composition after addition of the conductive material. For Sarnacol^{®} 2170 VC four samples were prepared at 2 wt.-%, 4 wt.-%, 6 wt.-%, and 8 wt.-% carbon fibres (Ex. 2 - Ex. 5), based on the total weight of the obtained composition. For Sarnacol^{®} 2170 one sample with 4 wt.% carbon fibres was prepared (Ex. 6), based on the total weight of the obtained composition. For Sarnacol^{®} 2121 VC one experiment composition with 6 wt.% carbon fibres was prepared (Ex. 7), based on the total weight of the obtained composition. For Ex. 1 Sarnacol 2170 VC was used, without adding of carbon fibres. Each composition was then mixed at 1000 rpms with a Cowles type blade for 15 minutes.

After mixing the experiment compositions were evaluated for viscosity and conductivity. Therefore, viscosity measurements were taken using a Brookfield viscometer with RV #2 spindle at 23 °C and conductivity measurement were taken using a PCWI Compact DC30 High Voltage Holiday Detector. For the conductivity measurement, the experiment compositions were applied at a rate of 100 ft²/gal (2.5 m²/L) onto 1 ft x 1 ft plywood boards (roughly 24 - 26 g per board) and applied via roller. The boards were allowed to cure for 7 days. The grounding wire of the Holiday Detector was secured to one corner of the applied and fully cured experiment compositions. The detector was set to output 5 and 6 kV from the electrode. The electrode was swept across the cured experiment compositions to measure the conductivity. The results of the viscosity and conductivity measurements of said experiment compositions are shown in table 1 ("Viscosity and Conductivity").

The composition containing 8 wt.-% carbon fibres (Ex. 5), was high in viscosity and therefore challenging to apply on a substrate by rolling or spraying.

One composition of each adhesive (Ex. 3, Ex. 6 and Ex. 7) was used as a conductive adhesive material for a leak detection experiment. Therefore, three 8 ft. x 8 ft. samples, one for each adhesive, were constructed using 1.5-inch Polyisocyanurate insulation. The insulation was fastened through existing insulation and into the steel deck on a 12 ft x 24 ft wind uplift table using Sarnafasteners and Sarnaplates (both commercially available from Sika, USA). Sarnafil^{®} S327-60 Feltback was adhered to one half of each sample and Sarnafil^{®} S327-80 was adhered to the other half. The membranes were connected by hot-air welding. The application rate and method are described in the following:
Apply adhesive (Ex.3, 6 or 7) to the substrate with an amount of 80 - 100 ft²/gal (2 - 2.5 m²/L) and allow to dry. Apply a second coat of adhesive with an amount of 100 ft²/gal (2.5 m²/L) to the previously coated dried substrate. Do not allow the second coat of adhesive to dry. Unroll the membrane immediately into the second layer of wet adhesive. Press the bonded sheet firmly in place with a minimum 75 lb (34 kg) steel roller by rolling in two directions. Use a hand roll on vertical flashings.

Cuts using a knife and punctures using a screwdriver were made at random locations on the samples. Using a PCWI Compact DC30 High Voltage Holiday Detector the membranes were tested on leaks using a setting of 10 kV. Therefore, as before, the grounding wire was secured to one exposed corner of the (conductive) fully cured adhesive, and the electrode was swept across the surface. All the cuts and punctures were detected successfully.

**Table 1, n.d. = not determined**

| **Electrically conductive adhesive compositions** | | | | |
|---|---|---|---|---|
| | **Adhesive** | **Wt.-% Carbon Fibres** | **Viscosity** | **Conductivity** |
| **Ex. 1** | Sarnacol 2170 VC | None added | 1600 cps | none |
| **Ex. 2** | Sarnacol 2170 VC | 2.0% | 1789 cps | none |
| **Ex. 3** | Sarnacol 2170 VC | 4.0 % | 1840 cps | yes |
| **Ex. 4** | Sarnacol 2170 VC | 6.0 % | 1888 cps | yes |
| **Ex. 5** | Sarnacol 2170 VC | 8.0 % | 2091 cps | n.d. |
| **Ex. 6** | Sarnacol 2170 | 4.0 % | n.d. | n.d. |
| **Ex. 7** | Sarnacol 2121 VC | 6.0 % | n.d. | n.d. |

## Claims

1. Method of detecting a leak in a water impermeable membrane comprising the following steps:
a) Adhering a water impermeable membrane **M** onto a support substrate **SuS** by an electrically conductive adhesive **ECA;**
b) applying electrical voltage higher than 600 V, preferably higher than 2 kV, more preferred between 5 and 10 kV, between a conductive detector **CD** on top of the water impermeable membrane **M** and the electrically conductive adhesive **ECA** such that current will flow between the electrically conductive adhesive **ECA** and the conductive detector **CD** through any leak located within the water impermeable membrane **M;**
c) sensing the current between the electrically conductive adhesive **ECA** and the conductive detector **CD** so as to detect any leak.

2. Method according to claim 1, wherein in step b) current will flow between the electrically conductive adhesive **ECA** and the conductive detector **CD** through the air, preferably by an electric arc, of any leak located within the impermeable membrane **M.**

3. Method according to any previous claims, wherein in step c) the current is detected by the conductive detector **CD** with an electrode brush, preferably an electrode brush with conductive metal bristles.

4. Method according to any previous claims, wherein the support substrate **SuS** is a roof.

5. Method according to any previous claims, wherein the electrically conductive adhesive **ECA** comprises:
a) at least one contact adhesive **CA** or pressure sensitive adhesive **PSA** or dispersion adhesive **DA,** preferably a contact adhesive **CA;** and
b) at least one electrically conductive filler material **ECFM.**

6. Method according to claim 5, wherein the contact adhesive **CA** comprises:
a) at least one rubber component, wherein the rubber component is selected from the group consisting of chloroprene rubber, butyl rubber, halogenated butyl rubber, nitrile rubber, natural rubber, and mixtures thereof, preferably nitrile rubber; preferably with a weight percent of 5 - 60 wt.-%, more preferably 10 - 50 wt.-%, even more preferably 10 - 30 wt.-%, based on the total weight of the contact adhesive **CA;** and
b) at least one organic solvent preferably with a weight percent of 50 - 90 wt.-%, more preferably 60 - 85 wt.-%, based on the total weight of the contact adhesive **CA.**

7. Method according to claim 5, wherein the dispersion adhesive **DA** comprises:
a) an aqueous dispersion comprising at least one polymer selected from the group consisting of polyvinyl acetate, vinyl acetate-ethylene copolymers (VAE), vinyl laurate-ethylene-vinyl chloride copolymers, acrylic polymer, and a mixture of two or more thereof, preferably vinyl acetate-ethylene copolymers (VAE); preferably with a weight percent of the at least one polymer being 10 - 70 wt.-%, more preferably 30 - 50 wt.-%, even more preferably 35 - 45 wt.-%, based on the total weight of the dispersion adhesive **DA;** and
b) a water content of 5 - 75 wt.-%, preferably 20 - 60 wt.-%, more preferably 30 - 40, based on the total weight of the dispersion adhesive **DA** and including the water content of the aqueous dispersion from a).

8. Method according to claim 5, wherein the pressure sensitive adhesive **PSA** compromises at least 85 wt.-%, preferably at least 90 wt.-% of at least one acrylic polymer, based on the total weight of the pressure sensitive adhesive **PSA.**

9. Method according to any of the claims 5 to 8, wherein the electrically conductive filler material **ECFM** is graphite, carbon black or carbon fibres **CF,** preferably carbon fibres **CF.**

10. Method according to claim 9, wherein the amount of electrically conductive filler material **ECFM,** preferably carbon fibres **CF,** in the electrically conductive adhesive **ECA** is 2.5 to 9.0 wt.-%, preferably 3.0 to 7.0 wt.-%, more preferably 4.0 to 6.0 wt.-%, based on the total weight of the electrically conductive adhesive **ECA.**

11. Method according to any of the claim 9 to 10, wherein the electrically conductive filler material **ECFM,** in the electrically conductive adhesive **ECA** are carbon fibres **CF,** wherein the carbon fibres **CF** have a length of 40 - 200 µm, preferably 50 - 150 µm, more preferably 60 - 120 µm

12. Method according to any of the claims 9 to 11, wherein the electrically conductive filler material **ECFM,** in the electrically conductive adhesive **ECA** are carbon fibres **CF,** wherein the carbon fibres **CF** have a diameter of 2 - 12 µm, preferably 3 - 10 µm, more preferably 4-7 µm.

13. Method according to any of the claims 9 to 12, wherein the electrically conductive filler material **ECFM,** in the electrically conductive adhesive **ECA** are carbon fibres **CF,** wherein the carbon fibres **CF** have an electrical resistivity of less than 5 mΩ*cm, preferably less than 3 mΩ*cm, more preferably less than 2 mΩ*cm.

14. Method according to any previous claims, wherein the electrically conductive adhesive **ECA,** after mixing all the components, has a viscosity of less than 10000 cP, preferably less than 5000 cP, more preferably less than 2000 cP, using a Brookfield DV1 viscometer with a RV #2 spindle at 23 °C.

15. Method according to any previous claims, wherein the water impermeable membrane **M** comprises a waterproofing layer **WL,** comprising at least one thermoplastic elastomer **P1.**

16. Method according to claim 15, wherein the at least one thermoplastic elastomer **P1** is selected from the group consisting of polyvinyl chloride (PVC), thermoplastic polyolefins and ethylene-propylene diene monomer (EPDM).

17. Method according to claim 15 or 16, wherein the waterproofing layer **WL** has a thickness determined by using the measurement method as defined in DIN EN 1849-2 standard of 0.1 - 5.0 mm, preferably 0.4 - 3.0 mm.

18. Method according to any of the claims 15 to 17, wherein the water impermeable membrane **M** further comprising a reinforcement layer, preferably fully embedded into the waterproofing layer **WL,** wherein the reinforcement layer is selected from the group consisting of a layer comprising non-woven fabric comprising inorganic and/or synthetic fibres and a layer comprising non-woven scrim comprising inorganic and/or synthetic fibres.
